# EUROPEAN PATENT APPLICATION

(11) **EP 4 173 502 A1**
(43) Date of publication of application: **03.05.2023**
(21) Application number: 21832491.1
(22) Date of filing: 15.03.2021
(51) Int. Cl.: A24F 40/40, A24F 40/42, A24F 40/10, A24F 40/46, A24F 40/50

(54) **ATOMIZER, BATTERY ROD, AND ELECTRONIC ATOMIZATION DEVICE**

(30) Priority: 29.06.2020 CN 202010608642
(71) Applicant: Shenzhen Smoore Technology Limited, Shenzhen, Guangdong 518102 (CN)
(72) Inventor: ZHAO, Bosong, Shenzhen, Guangdong 518102 (CN); DONG, Wenjie, Shenzhen, Guangdong 518102 (CN); ZHOU, Qingliang, Shenzhen, Guangdong 518102 (CN); FANG, Weiming, Shenzhen, Guangdong 518102 (CN)
(74) Representative: De Arpe Tejero, Manuel
(86) International application number: PCT/CN2021/080825
(87) International publication number: WO 2022/001183

(57) **Abstract**

An atomizer (12), a battery rod (11), and an electronic atomization device. The atomizer (12) comprises: a first input end and a second input end; a heating element (H), provided between the first input end and the second input end; and a level exchange module (125), connected to the first input end and the second input end, so that the atomizer (12) can be inserted forward or reversely into the battery rod (11). Moreover, one of the first input end and the second input end of the atomizer (12) serves as a power supply voltage input end (m1) of the atomizer (12), and the other serves as a ground voltage input end (m2) of the atomizer (12). The present electronic atomization device can be normally used no matter whether the atomizer (12) is inserted forward or reversely into the battery rod (11), thereby improving user experience.

## Description

### TECHNICAL FIELD

The present disclosure relates to the field of electronic atomization devices, and in particular, to an atomizer, a battery rod, and an electronic atomization device.

### BACKGROUND

When an existing atomizer and an existing battery rod are in use, the atomizer cannot be reversely inserted into the battery rod. If the atomizer is reversely inserted, the electronic atomization device cannot be used normally, which seriously affects the user experience.

### SUMMARY

The present disclosure provides an atomizer, a battery rod, and an electronic atomization device, so that the electronic atomization device can be used normally regardless of whether the atomizer is inserted into the battery rod rightly or reversely, thereby improving the user experience.

To resolve the foregoing technical problem, a first technical solution provided in the present disclosure is to provide an atomizer. The atomizer includes: a first input end and a second input end; a heating element, arranged between the first input end and the second input end; and a level exchange module, connecting the first input end and the second input end, for the atomizer to be inserted into a battery rod rightly or reversely, where one of the first input end and the second input end of the atomizer is used as a power supply voltage input end of the atomizer, and the other is used as a ground voltage input end of the atomizer.

In some embodiments, the level exchange module includes: a rectifying circuit, including a first path, a second path, a power supply voltage output end, and a ground voltage output end, where the first path and the second path are connected in parallel and are respectively arranged between the power supply voltage output end and the ground voltage output end, the first path is connected to the first input end, and the second path is connected to the second input end; a first control unit, arranged between the second input end and the ground voltage output end, and connected to the first path; and a second control unit, arranged between the first input end and the ground voltage output end, and connected to the second path, where when the first input end is used as the power supply voltage input end to receive a power supply voltage, and the second input end is used as the ground voltage input end to receive a ground voltage, the first control unit controls the first path to conduct the path between the first input end and the power supply voltage output end, and the second control unit controls the second path to conduct the path between the second input end and the ground voltage output end; and when the first input end is used as the ground voltage input end to receive a ground voltage, and the second input end is used as the power supply voltage input end to receive the power supply voltage, the second control unit controls the second path to conduct the path between the second input end and the power supply voltage output end, and the first control unit controls the first path to conduct the path between the first input end and the ground voltage output end.

In some embodiments, the first control unit includes: a fourth resistor, the first end of which is connected to the second input end, and the second end of which is connected to the ground voltage output end; a third diode, the first end of which is connected to the second input end, and the second end of which is connected to the ground voltage output end; and a second capacitor, the first end of which is connected to the second end of the fourth resistor, and the second end of which is connected to the ground voltage output end. The second control unit includes: a third resistor, the first end of which is connected to the first input end, and the second end of which is connected to the ground voltage output end; a second diode, the first end of which is connected to the first input end, and the second end of which is connected to the ground voltage output end; and a third capacitor, the first end of which is connected to the second end of the third resistor, and the second end of which is connected to the ground voltage output end.

In some embodiments, the first path includes: a seventh switch, a control end of which is connected to the first end of the second capacitor, a first channel end of which is connected to the power supply voltage output end, and a second channel end of which is connected to the first input end; and an eighth switch, a control end of which is connected to the first end of the third capacitor, a first channel end of which is connected to the ground voltage output end, and a second channel end of which is connected to the first input end.

In some embodiments, the second path includes: a fifth switch, a control end of which is connected to the first end of the third capacitor, a first channel end of which is connected to the ground voltage output end, and a second channel end of which is connected to the second input end; and a sixth switch, a control end of which is connected to the first end of the third capacitor, a first channel end of which is connected to the power supply voltage output end, and a second channel end of which is connected to the second input end.

In some embodiments, the atomizer further includes: an identification circuit, connecting the first input end and the second input end, where when the atomizer is inserted into the battery rod, the identification circuit is configured to feed back identification information of the atomizer, for the battery rod to use, according to the identification information fed back, a corresponding power to drive the atomizer.

In some embodiments, the identification circuit includes: a second control chip, including a power supply end, a signal acquisition end, and a drive end; a storage capacitor, where the first end of the storage capacitor is connected to the first input end, the second end of the storage capacitor is connected to the second input end, and the first end of the storage capacitor is connected to the power supply end of the second control chip; and a switch module, where a control end of the switch module is connected to the drive end of the second control chip, a first channel end of the switch module is connected to the first input end, and a second channel end of the switch module is connected to the second input end, where the signal acquisition end of the second control chip is connected to the first input end.

In some embodiments, the switch module includes a third switch and a fourth switch, a control end of the third switch and a control end of the fourth switch are connected and used as the control end of the switch module, a second channel end of the third switch and a second channel end of the fourth switch are connected, and the first channel end of the third switch and the first channel end of the fourth switch are respectively used as the first channel end and the second channel end of the switch module and are respectively connected to the first input end and the second input end of the atomizer.

To resolve the foregoing technical problem, a second technical solution provided in the present disclosure is to provide a battery rod. The battery rod includes: a first output end and a second output end, where when an atomizer is inserted into the battery rod rightly or reversely, one of the first output end and the second output end is used as a power supply voltage input end of the atomizer, and the other is used as a ground voltage input end of the atomizer.

In some embodiments, the battery rod further includes: a power supply identifying circuit, where when the atomizer is inserted into the battery rod, the power supply identifying circuit receives identification information fed back by the atomizer, and uses, according to the identification information fed back, a corresponding power to drive the atomizer.

In some embodiments, the power supply identifying circuit includes: a first control chip, including a first drive end, a second drive end, and a feedback end; a first switch, a control end of which is connected to the first drive end to receive a first drive signal, a first channel end of which is connected to a power supply voltage, and a second channel of which is connected to the first output end of the battery rod; and a second switch, a control end of which is connected to the second drive end to receive a second drive signal, a first channel end of which is connected to the power supply voltage, and a second channel end of which is connected to the first output end of the battery rod through a first resistor, where the feedback end of the first control chip is connected to the first output end of the battery rod, and the second output end of the battery rod is connected to a ground voltage.

In some embodiments, when the atomizer is rightly inserted into the battery rod, the first output end is connected to a first input end of the atomizer, and the second output end is connected to a second input end of the atomizer; and when the atomizer is reversely inserted into the battery rod, the second output end is connected to the first input end of the atomizer, and the first output end is connected to the first input end of the atomizer.

In some embodiments, the first control chip controls the first switch by using the first drive signal to supply power to the atomizer, and controls the second switch by using the second drive signal to communicate with the identification circuit of the atomizer, to obtain the identification information of the atomizer, and adjust the first drive signal according to the identification information fed back to use the corresponding power to drive the atomizer.

To resolve the foregoing technical problem, a third technical solution provided in the present disclosure is to provide an electronic atomization device. The electronic atomization device includes the atomizer according to any of the above and/or the battery rod according to any of the above.

Beneficial effects of the present disclosure are as follows: different from the related art, the atomizer provided in the present disclosure includes the level exchange module, connecting the first input end and the second input end, for the atomizer to be inserted into a battery rod rightly or reversely, where one of the first input end and the second input end of the atomizer is used as a power supply voltage input end of the atomizer, and the other is used as a ground voltage input end of the atomizer. In this way, the electronic atomization device can still be used normally regardless of whether the atomizer is inserted into the battery rod rightly or reversely, thereby improving the user experience.

### BRIEF DESCRIPTION OF THE DRAWINGS

FIG. 1 is a schematic structural diagram of a battery rod according to an embodiment of the present disclosure.
FIG. 2 is a schematic timing diagram of a first switch and a second switch in the battery rod shown in FIG. 1.
FIG. 3 is a schematic diagram of a waveform of a power supply voltage connection end n1 when an atomizer is inserted into the battery rod according to the present disclosure.
FIG. 4 is a schematic structural diagram of an atomizer according to a first embodiment of the present disclosure.
FIG. 5 is a schematic structural diagram of an atomizer according to a second embodiment of the present disclosure.
FIG. 6 is a schematic structural diagram of an atomizer according to a third embodiment of the present disclosure.
FIG. 7 is a schematic structural diagram of an electronic atomization device according to a first embodiment of the present disclosure.
FIG. 8 is a schematic structural diagram of an electronic atomization device according to a second embodiment of the present disclosure.
FIG. 9 is a schematic structural diagram of an electronic atomization device according to a third embodiment of the present disclosure.

### DETAILED DESCRIPTION

The technical solutions in embodiments of the present disclosure are clearly and completely described below with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

The present disclosure is further described in detail below with reference to the accompanying drawings and the embodiments.

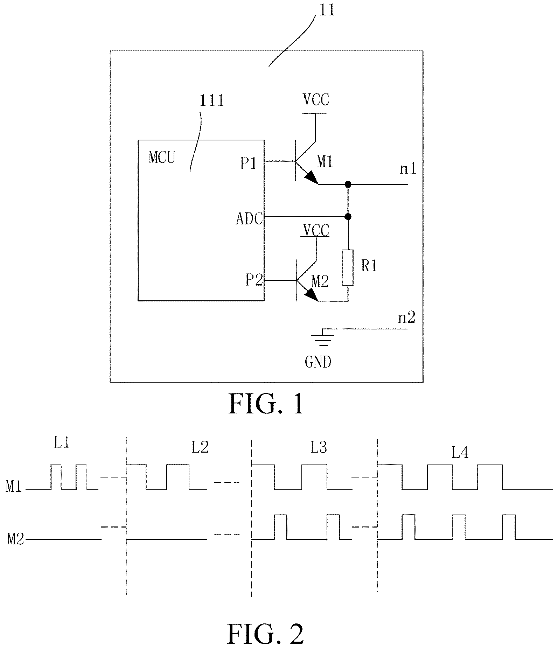

As shown in FIG. 1, FIG. 1 is a schematic structural diagram of a battery rod according to an embodiment of the present disclosure. A battery rod 11 is configured to supply power to an atomizer inserted therein. Specifically, the battery rod 11 includes a power supply identifying circuit. When the atomizer is inserted into the battery rod 11, the power supply identifying circuit receives identification information fed back by the atomizer, and uses, according to the identification information fed back, a corresponding power to drive the atomizer. Further, the battery rod 11 includes a power supply voltage connection end n1 and a ground voltage connection end n2.

Specifically, the power supply identifying circuit includes: a first control chip 111, a first switch M1, a second switch M2, and a first resistor R1. The first control chip 111 includes a first drive end P1, a second drive end P2, and a feedback end ADC. The first switch M1 includes a control end, a first channel end, and a second channel end. The control end of the first switch M1 is connected to the first drive end P1 of the first control chip 111 to receive a first drive signal, the first channel end of the first switch M1 is connected to a power supply voltage VCC, and the second channel end of the first switch M1 is connected to the power supply voltage connection end n1 of the battery rod 11. The second switch M2 includes a control end, a first channel end, and a second channel end. The control end of the second switch M2 is connected to the second drive end P2 to receive a second drive signal, the first channel end of the second switch M2 is connected to the power supply voltage VCC, and the second channel end of the second switch M2 is connected to the power supply voltage connection end n1 of the battery rod 11 through the first resistor R1. Specifically, the first resistor R1 includes a first channel end and a second channel end, the first channel end of the first resistor R1 is connected to the power supply voltage connection end n1 of the battery rod 11, and the second channel end of the first resistor R1 is connected to the second channel end of the second switch M2. The feedback end ADC of the first control chip 111 is connected to the power supply voltage connection end n1 of the battery rod 11, and the ground voltage connection end n2 of the battery rod 11 is connected to a ground voltage GND.

In an embodiment, if the atomizer inserted into the battery rod 11 does not include an identification circuit, the second drive end P2 of the first control chip 111 outputs the second drive signal, and the second drive signal is used to turn on the second switch M2. The first resistor R1 and a heating element in the atomizer are connected in series between the power supply voltage VCC and the ground voltage GND. The feedback end ADC receives a feedback voltage on the power supply voltage connection end n1 of the battery rod 11 between the first resistor R1 and the heating element to determine performance parameters of a heating wire. The first control chip 111 adjusts the first drive signal outputted by the first drive end P1 according to the feedback voltage, so that the battery rod 11 uses the corresponding power to drive the heating element in the atomizer, and further heats a substance to-be-atomized in the atomizer.

In the embodiments of the present disclosure, to realize mutual identification of the battery rod 11 and the atomizer, the atomizer inserted into the battery rod 11 includes an identification circuit. Specifically, when the atomizer inserted into the battery rod 11 includes the identification circuit, the first control chip 111 controls the first switch M1 by using the first drive signal to supply power to the atomizer, and controls the second switch M2 by using the second drive signal to communicate with the identification circuit of the atomizer, to obtain the identification information of the atomizer, and adjust the first drive signal according to the identification information fed back to use the corresponding power to drive the atomizer. That is, when the atomizer inserted into the battery rod 11 includes the identification circuit, the first switch M1 and the second switch M2 further have the function of obtaining the identification information of the atomizer in addition to the function of driving the heating element to heat.

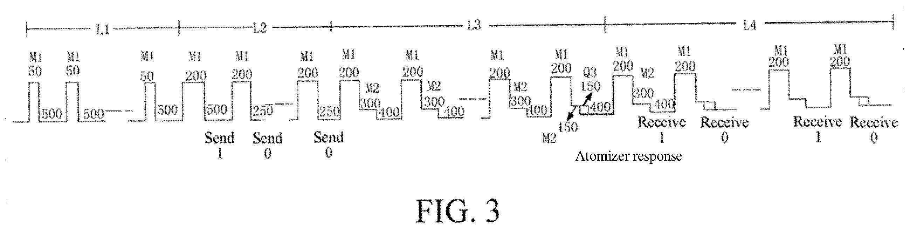

Specifically, with reference to FIG. 2 and FIG. 3, when the atomizer is inserted into the battery rod 11, the battery rod 11 supplies power to the atomizer to perform a power-on period L1, and executes a data sending period L2, a response waiting period L3, and a feedback data receiving period L4.

Specifically, when the atomizer with the identification circuit is inserted into the battery rod 11, the battery rod 11 supplies power to the atomizer, that is, the power-on period L1 is performed. During the power-on period L1, the first drive end P1 of the first control chip 111 outputs the first drive signal. Specifically, the first drive signal drives the first switch M1 with a pulse signal formed by a first logic level of a first duration and a second logic level of a second duration, so that the atomizer is powered on to work. Specifically, in a specific embodiment, the first logic level is a high-level signal, the second logic level is a low-level signal, the first logic level of the first duration is a high-level signal of 50us, and the second logic level of the second duration is a low-level signal of 500us. Specifically, the first drive end P1 of the first control chip 111 of the battery rod 11 applies a pulse signal formed by the high-level signal of 50us and the low-level signal of 500us to the first switch M1, to drive the first switch M1 to be turned on. After the first switch M1 is turned on, the power supply voltage VCC charges the atomizer through the first switch M1, thereby providing electric energy for the atomizer. In an embodiment, it generally takes 6ms to power on the atomizer. Therefore, before the atomizer is woken up, the first drive end P1 outputs a plurality of pulse signals.

During the data sending period L2, the first drive signal drives the first switch M1 by using a pulse signal formed by a first logic level of an eighth duration, and a second logic level of a ninth duration or a second logic level of a tenth duration, to generate a sending voltage of the ninth duration or a sending voltage of the tenth duration at the power supply voltage connection end n1 of the battery rod 11 as a corresponding sending digital signal, to form sending data to be sent to the atomizer. Specifically, the first logic level of the eighth duration is a high-level signal of 200us, the second logic level of the ninth duration is a low-level signal of 500us, and the second logic level of the tenth duration is a low-level signal of 250us. In a specific embodiment, the first drive signal may drive the first switch M1 by using a pulse signal formed by the high-level signal of 200us and the low-level signal of 500us, to generate a sending voltage of the low-level signal of 500us at the power supply voltage connection end n1 of the battery rod 11, and send the sending voltage to the atomizer. Alternatively, the first drive signal may alternatively drive the first switch M1 by using a pulse signal formed by the high-level signal of 200us and the low-level signal of 250us, to generate a sending voltage of the low-level signal of 250us at the power supply voltage connection end n1 of the battery rod 11, and send the sending voltage to the atomizer. Specifically, when the sending voltage is a low-level signal of 500us, data "1" can be sent; and when the sending voltage is a low-level signal of 250us, data "0" can be sent.

During the response waiting period L3, the first drive signal drives the first switch M1 by using a pulse signal formed by a first logic level of an eleventh duration and a second logic level of a twelfth duration; and when the first drive signal is at the second logic level, the second drive signal drives the second switch M2 by using a pulse signal formed by a first logic level of a thirteenth duration and a second logic level of a fourteenth duration. When the identification circuit of the atomizer sends a response to perform a discharge operation on the power supply voltage connection end n1 of the battery rod 11, a waiting voltage of the thirteenth duration of the power supply voltage connection end n1 of the battery rod 11 is switched to a response voltage of a fifteenth duration, which is then fed back to the feedback end of the first control chip 111, thereby informing the first control chip 111 to wait to receive the identification information fed back. Specifically, the first logic level of the eleventh duration may be a high-level signal of 200us, and the second logic level of the twelfth duration may be a low-level signal of 700us; and the first drive signal drives the first switch M1 by using a pulse signal formed by the high-level signal of 200us and the low-level signal of 700us. The first logic level of the thirteenth duration is a high-level signal of 300us, and the second logic of the fourteenth duration is a low-level signal of 400us. Specifically, when the first drive signal is at the low-level signal of 700us, the second drive signal drives the second switch M2 by using a pulse signal formed by the high-level signal of 300us and the low-level signal of 400us. Specifically, when the atomizer receives the sending voltage, the identification circuit of the atomizer sends a response to perform a discharge operation on the power supply voltage connection end n1 of the battery rod 11. In this case, the second high-level signal of 300us of the power supply voltage connection end n1 of the battery rod 11 is switched to a second high-level signal of 150us to form a response voltage, which is then fed back to the feedback end ADC of the first control chip 111, thereby informing the first control chip 111 to wait to receive the identification information fed back.

During the feedback data receiving period L4, the first drive signal drives the first switch M1 by using a pulse signal formed by a first logic level of a third duration and a second logic level of a fourth duration, to supply power to the atomizer. When the first drive signal is at the second logic level, the second drive signal drives the second switch M2 by using a pulse signal formed by a first logic level of a fifth duration and a second logic level of a sixth duration. When the second drive signal is at the first logic level, the identification circuit of the atomizer determines to perform the discharge operation on the power supply voltage connection end n1 of the battery rod 11 according to the identification information, to generate a feedback voltage of the fifth duration or a feedback voltage of a seventh duration at the power supply voltage connection end n1 of the battery rod 11 as a corresponding feedback digital signal, to form identification information to be fed back to the feedback end ADC of the first control chip 111. Specifically, the first logic level of the third duration is a high-level signal of 200us, and the second logic level of the fourth duration is a low-level signal of 700us. The first drive signal drives the first switch M1 by using the high-level signal of 200us and the low-level signal of 700us to supply power to the atomizer. The first logic level of the fifth duration is a high-level signal of 300us, and the second logic level of the sixth duration is a low-level signal of 400us. In a specific embodiment, when the first drive signal is at the low-level signal of 700us, the second drive signal drives the second switch M2 by using the pulse signal formed by the high-level signal of 300us and the low-level signal of 400us. In addition, when the second drive signal is at the high-level signal of 300us, the identification circuit of the atomizer performs the discharge operation on the power supply voltage connection end n1 of the battery rod 11, to generate a high-level signal of 300us or a high-level signal of 150us at the power supply voltage connection end n1 of the battery rod 11 as a corresponding feedback digital signal, to form identification information to be fed back to the feedback end ADC of the first control chip 111. The high-level signal of 150us is the feedback voltage of the seventh duration. Specifically, in an embodiment, if the feedback voltage received by the feedback end ADC of the first control chip 111 is the high-level signal of 300us, it indicates that the data "1" returned by the atomizer is received. If the feedback voltage received by the feedback end ADC of the first control chip 111 is the high-level signal of 150us, it indicates that the data "0" returned by the atomizer is received. It may be understood that, as shown in FIG. 3, the feedback voltage of the high-level signal received by the feedback end ADC of the first control chip 111 is a resistance value of the heating element H and a voltage division value of the first resistor R1, and has a voltage value lower than the high-level signals outputted from the first drive signal and the second drive signal.

In a specific embodiment, the first switch M1 and the second switch M2 may be NMOS transistors and PMOS transistors, or may be PNP transistors and NPN transistors. The first control chip 111 may be a general-purpose programmable control chip, or a customized non-programmable control chip, which is not specifically limited.

The battery rod provided in the present disclosure includes the power supply identifying circuit. When the atomizer is inserted into the battery rod, the power supply identifying circuit receives the identification information fed back by the atomizer, and uses, according to the identification information fed back, the corresponding power to drive the atomizer, so that the problem of poor user experience caused by mixed use of a battery rod and an atomizer of different models can be avoided, and the atomizer can be driven with the power matching the atomizer. Further, a substance to-be-atomized in the atomizer can still obtain the expected effect after atomized, which improves the user experience.

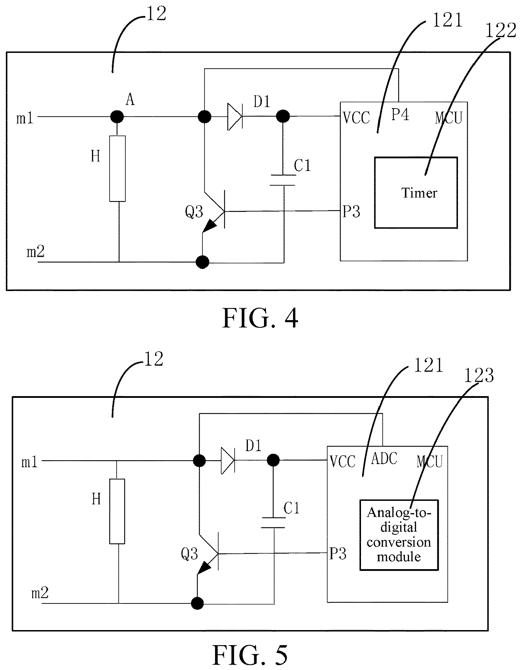

As shown in FIG. 4, FIG. 4 is a schematic structural diagram of an atomizer according to a first embodiment of the present disclosure. Specifically, an atomizer 12 is configured to be inserted into a battery rod 11 to use the battery rod 11 to supply power to the atomizer 12. The atomizer 12 includes a heating element H, where one end of the heating element H is connected to a power supply voltage connection end m1 of the atomizer 12, and the other end is connected to a ground voltage connection end m2 of the atomizer 12. When the atomizer 12 is inserted into the battery rod 11, the power supply voltage connection end m1 and the ground voltage connection end m2 of the atomizer 12 are respectively connected to a power supply voltage connection end n1 and a ground voltage connection end n2 of the battery rod 11. In this way, a power supply identifying circuit of the battery rod 11 is used to identify the atomizer 12, and a corresponding power is used to drive the atomizer 12.

The atomizer 12 further includes an identification circuit. The identification circuit is connected in parallel with the heating element H and connected to the power supply voltage connection end m1 and the ground voltage connection end m2 of the atomizer 12, and is configured to communicate with the power supply identifying circuit of the battery rod 11, to feed back identification information to the battery rod 11, for the battery rod 11 to use, according to the identification information fed back, a corresponding power to drive the heating element H of the atomizer 12, thereby atomizing a substance to-be-atomized in the atomizer 12.

In a specific embodiment, the atomizer 12 further includes a liquid storage chamber, and the heating element H may be placed in the liquid storage chamber. The liquid storage chamber stores a substance to-be-atomized, for example, e-liquid. When the battery rod 11 uses the corresponding power to drive the heating element H, the heating element H generates heat and atomizes the e-liquid stored in the liquid storage chamber.

Specifically, the identification circuit includes: a second control chip 121, a switch module Q3, and a storage capacitor C1. The second control chip 121 includes a power supply end VCC, a signal acquisition end P4, and a drive end P3. The storage capacitor C1 includes the first end and the second end. The first end of the storage capacitor C1 is connected to the power supply voltage connection end m1 of the atomizer 12, the second end of the storage capacitor C1 is connected to the ground voltage connection end m2 of the atomizer 12, and the first end of the storage capacitor C1 is connected to the power supply end of the second control chip 121. The switch module Q3 includes a first channel end, a second channel end, and a control end, where the control end of the switch module Q3 is connected to the drive end P3 of the second control chip 121, the first channel end of the switch module Q3 is connected to the power supply voltage connection end m1 of the atomizer 12, and the second channel end of the switch module Q3 is connected to the ground voltage connection end m2 of the atomizer 12. The signal acquisition end P4 of the second control chip 121 is connected to the power supply voltage connection end m1 of the atomizer 12.

In an embodiment, when the atomizer 12 is inserted into the battery rod 11, referring to FIG. 3 together, FIG. 3 is a schematic timing diagram of a waveform of a power supply voltage connection end n1 when the atomizer is inserted into the battery rod according to the present disclosure. Further, FIG. 3 is also a schematic timing diagram of a waveform at a point A when the atomizer shown in FIG. 4 is inserted into the battery rod shown in FIG. 1. Specifically, when the battery rod 11 operates in the power-on period L1, the first drive end P1 of the first control chip 111 outputs a first drive signal. Specifically, the first drive signal drives the first switch M1 by using a pulse signal formed by a first logic level of 50us and a second logic level of 500us, so that the first switch M1 in the battery rod 11 is turned on, and a power supply voltage VCC charges the storage capacitor C1 through the first switch M1, thereby providing electric energy to the second control chip 121 in the atomizer 12. Further, the identification circuit further includes a first diode D1, and the first diode D1 includes the first end and the second end. The first end of the first diode D1 is connected to the power supply voltage connection end m1 of the atomizer 12, and the second end of the first diode D1 is connected to the power supply end of the second control chip 121. When the atomizer 12 is charged, the first diode D1 is configured to prevent a reverse voltage from damaging the second control chip 121 of the atomizer 12, and the first diode D1 can further prevent other circuits from consuming energy. Specifically, when the storage capacitor C1 is charged to a high level, and the first drive signal has a low-level signal, if the first diode D1 does not exist, the storage capacitor C1 is discharged through the heating wire H, thereby consuming energy.

When the battery rod 11 operates in the data sending period L2, the signal acquisition end P4 of the second control chip 121 acquires a sending voltage of a ninth duration or a sending voltage of a tenth duration at the power supply voltage connection end m1 of the atomizer 12 as a correspondingly sending digital signal, thereby acquiring and generating corresponding sending data. Specifically, when the battery rod 11 operates in the data sending period L2, a low-level signal of 500us or a sending voltage of a low-level signal of 250us is generated at the power supply voltage connection end n1 of the battery rod 11. Specifically, if the power supply voltage connection end n1 of the battery rod 11 generates the low-level signal of 500us, it indicates that the battery rod 11 sends data "1"; and if the power supply voltage connection end n1 of the battery rod 11 generates the low-level signal of 250us, it indicates that the battery rod 11 sends data "0". In this case, if the signal acquisition end P4 of the second control chip 121 acquires the low-level signal with the sending voltage of 500us at the power supply voltage connection end m1 of the atomizer 12, it indicates that the atomizer 12 receives the data "1"; and if the signal acquisition end P4 of the second control chip 121 acquires the low-level signal with the sending voltage of 250us at the power supply voltage connection end m1 of the atomizer 12, it indicates that the atomizer 12 receives the data "0".

Specifically, in an embodiment, the second control chip 121 further includes a timer 122, and the timer 122 cooperates with the signal acquisition end P4 to identify the sending voltage of the ninth duration or the sending voltage of the tenth duration at the power supply voltage connection end m1 of the atomizer 12. Specifically, when the signal acquisition end of the second control chip 121 of the atomizer 12 receives a low-level signal, the timer 122 is started to work. If the timer 122 displays a time of 500us, it indicates that the atomizer 12 receives the data "1"; and if the timer 122 displays a time of 250us, it indicates that the atomizer 12 receives the data "0". Alternatively, in another embodiment, the second control chip further includes an analog-to-digital conversion module 123. For details, reference may be made to FIG. 5. FIG. 5 is a schematic structural diagram of an atomizer according to a second embodiment of the present disclosure. The signal acquisition end P4 is an analog-to-digital conversion end ADC, configured to identify the sending voltage of the ninth duration or the sending voltage of the tenth duration at the power supply voltage connection end m1 of the atomizer 12. Specifically, in the data sending period L2, the battery rod 11 turns on the first switch M1 to charge the storage capacitor C1 every cycle, turns on the first switch M2, and then sends, through the second switch M2, sending voltages with different pulse widths of 300us and 150us to the analog-to-digital conversion end of the second control chip 121 of the atomizer 12 for acquisition and identification. When the analog-to-digital conversion end of the second control chip 121 of the atomizer 12 acquires the sending voltage for a duration of 300us, it indicates that the atomizer 12 receives the data " 1 "; and when the analog-to-digital conversion end of the second control chip 121 of the atomizer 12 acquires the sending voltage for a duration of 150us, it indicates that the atomizer 12 receives the data "0". In a specific embodiment, considering the costs, in practical applications, the atomizer of the first embodiment shown in FIG. 4 is preferably used, which has lower costs compared with the atomizer of the second embodiment shown in FIG. 5.

When the battery rod 11 operates in the response waiting period L3, the second control chip 121 controls the switch module Q3 to perform the discharge operation on the power supply voltage connection end m1 of the atomizer 12, so that the waiting voltage of the thirteenth duration at the power supply voltage connection end m1 of the atomizer 12 is switched to the response voltage of the fifteenth duration, and a response signal is generated at the power supply voltage connection end m1 of the atomizer 12 to notify the first control chip 111 to wait to receive the identification information fed back. Specifically, when the battery rod 11 operates in the response waiting period L3, a second drive signal outputted by the second drive end P2 of the first control chip 111 of the battery rod 11 is a high-level signal of 300us. If the atomizer 12 is still in a process of processing data, the drive end P3 of the second control chip 121 of the atomizer 12 does not output any signal, that is, in a low-level state. In this case, the level of the power supply voltage connection end m1 of the atomizer 12 continues to be a high-level signal of 300us. If the atomizer 12 has received sending data and returns a corresponding voltage, the drive end P3 of the second control chip 121 of the atomizer 12 outputs a high-level signal of 150us, so that level of the power supply voltage connection end m1 of the atomizer 12 is switched from the high-level signal of 300us to the high-level signal of 150us. In this case, the feedback end ADC of the first control chip 111 of the battery rod 11 acquires a response voltage of the power supply voltage connection end m1 of the atomizer 12. If a duration of the response voltage is not 300us but 150us, it indicates that the atomizer has responded. When the battery rod 11 operates in the feedback data receiving period L4, the second control chip 121 controls the switch module Q3 to determine the discharge operation on the power supply voltage connection end m1 of the atomizer 12, so that the power supply voltage connection end m1 of the atomizer 12 generates the feedback voltage of the fifth duration or the feedback voltage of the seventh duration as a corresponding feedback digital signal to form the identification information fed back. Specifically, when the battery rod 11 operates in the feedback data receiving period L4, the second drive end P2 of the first control chip 111 of the battery rod 11 applies the high-level signal of 300us to the second switch M2. If the drive end P3 of the second control chip 121 of the atomizer 12 outputs a low-level signal, that is, the switch module Q3 is turned off or outputs the data "1", the voltage of the power supply voltage connection end m1 of the atomizer 12 in this case continues to be the high-level signal of 300us; and if the drive end P3 of the second control chip 121 of the atomizer 12 outputs a high-level signal, that is, the switch module Q3 is turned on or outputs the data "0", the voltage of the power supply voltage connection end m1 of the atomizer 12 continues to be the high-level signal of 150us. In this case, if the feedback end ADC of the first control chip 111 of the battery rod 11 acquires that the voltage of the power supply voltage connection end m1 of the atomizer 12 continues to be the high-level signal of 300us, it indicates that the data "1" returned by the atomizer 12 is received; and if the feedback end ADC of the first control chip 111 of the battery rod 11 acquires that the voltage of the power supply voltage connection end m1 of the atomizer 12 continues to be the high-level signal of 150us, the data "0" returned by the atomizer 12 is received.

It may be understood that the waveforms shown in FIG. 2 and FIG. 3 are only examples, and the present disclosure is not limited thereto.

The atomizer provided in the present disclosure includes an identification circuit. The identification circuit is connected in parallel with the heating element and connected to the power supply voltage connection end m1 and the ground voltage connection end m2 of the atomizer, and is configured to communicate with the power supply identifying circuit of the battery rod, to feed back identification information to the battery rod. Therefore, the battery rod uses, according to the identification information fed back, the corresponding power to drive the heating element of the atomizer, so that the problem of poor user experience caused by mixed use of a battery rod and an atomizer of different models can be avoided, and the atomizer can be driven with the power matching the atomizer. In this way, a substance to-be-atomized in the atomizer can still obtain the expected effect after atomized, which improves the user experience.

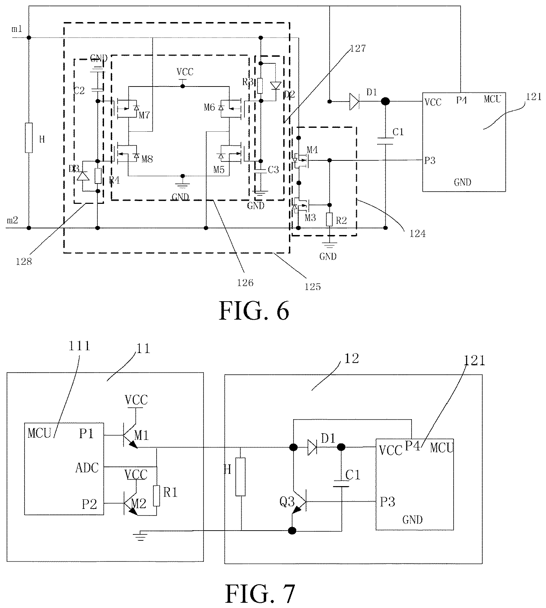

As shown in FIG. 6, FIG. 6 is a schematic structural diagram of an atomizer according to a third embodiment of the present disclosure. In this embodiment, the atomizer 12 further includes a level exchange module 125. The level exchange module 125 is connected between the identification circuit and a first input end and a second input end of the atomizer 12, for the atomizer to be inserted into the battery rod 11 rightly or reversely. In addition, one of the first input end and the second input end of the atomizer 12 is used as the power supply voltage connection end m1 of the atomizer 12, and the other is used as the ground voltage connection end m2 of the atomizer 12. Specifically, if the atomizer 12 is inserted into the battery rod 11 rightly, the power supply voltage connection end m1 of the atomizer 12 is connected to the power supply voltage connection end n1 of the battery rod 11, and the ground voltage connection end m2 of the atomizer 12 is connected to the ground voltage connection end n2 of the battery rod. If the atomizer 12 is inserted into the battery rod 11 reversely, the power supply voltage connection end m1 of the atomizer 12 is connected to the ground voltage connection end n2 of the battery rod 11, and the ground voltage connection end m2 of the atomizer 12 is connected to the power supply voltage connection end n1 of the battery rod 11.

In this embodiment, a switch module 124, also the switch module Q3 in FIG. 4 and FIG. 5, includes a third switch M3 and a fourth switch M4, where the third switch M3 includes a first channel end, a second channel end, and a control end, and the fourth switch M4 includes a first channel end, a second channel end, and a control end. Specifically, the control end of the third switch M3 and the control end of the fourth switch M4 are connected as a control end of the switch module 124, and are connected to the drive end P3 of the second control chip 121. The second channel end of the third switch M3 and the second channel end of the fourth switch M4 are connected, and the first channel end of the third switch M3 and the first channel end of the fourth switch M4 are respectively used as a first channel end and a second channel end of the switch module 124 and are respectively connected to the first input end and the second input end of the atomizer. Further, the first channel end of the third switch M3 is connected to the ground voltage connection end m2 of the atomizer 12, and the first channel end of the fourth switch M4 is connected to the power supply voltage connection end m1 of the atomizer 12.

In another embodiment, the switch module 124 further includes a second resistor R2, and the second resistor R2 includes the first end and the second end, where the first end of the second resistor R2 is connected to the control ends of the third switch M3 and the fourth switch M4, and the second end of the second resistor R2 is connected to the ground voltage output end GND.

In a specific embodiment, the third switch M3 and the fourth switch M4 are NMOSFETs. In this embodiment, a drain of the third switch M3 and a drain of the fourth switch M4 are connected to implement the turn-on and turn-off of the circuit. It can prevent the voltage from being clamped to the ground voltage through body diodes of the third switch M3 and the fourth switch M4 when the atomizer 12 is inserted into the battery rod 11 rightly or reversely.

Specifically, when the battery rod 11 operates in the data sending period L2, if the atomizer 12 is inserted into the battery rod 11 rightly, that is, the power supply voltage connection end m1 of the atomizer 12 is connected to the power supply voltage connection end n1 of the battery rod 11 and the ground voltage connection end m2 of the atomizer 12 is connected to the ground voltage connection end n2 of the battery rod, voltages of the control ends (gates) of the third switch M3 and the fourth switch M4 are at a low level. In this case, both the third switch M3 and the fourth switch M4 are turned off, and the voltage reaches the first channel end (source) of the fourth switch M4 first. Since the fourth switch M4 has a body diode, the voltage may reach a cathode from an anode of the body diode, and reach the third switch M3. However, since the body diode of the third switch M3 is opposite to that of the fourth switch M4, the voltage cannot pass through the third switch M3, so that the switch module 124 can be turned off. If the atomizer 12 is inserted into the battery rod 11 reversely, that is, the power supply voltage connection end m1 of the atomizer 12 is connected to the ground voltage connection end n2 of the battery rod 11 and the ground voltage connection end m2 of the atomizer 12 is connected to the power supply voltage connection end n1 of the battery rod 11, voltages of the control ends (gates) of the third switch M3 and the fourth switch M4 are at a low level. In this case, both the third switch M3 and the fourth switch M4 are turned off, and the voltage reaches the first channel end (source) of the third switch M3 first. Since the third switch M3 has a body diode, the voltage may reach a cathode from an anode of the body diode, and reach the fourth switch M4. However, since the body diode of the third switch M3 is opposite to that of the fourth switch M4, the voltage cannot pass through the fourth switch M4, so that the switch module 124 can be turned off.

Specifically, when the battery rod 11 operates in the feedback data receiving period L4, if the atomizer 12 is inserted into the battery rod 11 rightly, that is, the power supply voltage connection end m1 of the atomizer 12 is connected to the power supply voltage connection end n1 of the battery rod 11 and the ground voltage connection end m2 of the atomizer 12 is connected to the ground voltage connection end n2 of the battery rod, voltages of the control ends (gates) of the third switch M3 and the fourth switch M4 are at a high level. A voltage difference Vgs between the control end (gate) and the first channel end (source) of the third switch M3 is greater than a threshold voltage. In this case, the third switch M3 is turned on first, and the drain of the fourth switch M4 is turned on, and then connected to the ground voltage output end GND. The voltage of the first channel end (source) of the fourth switch M4 is clamped to Vsd by the body diode. When a voltage difference Vgs between the gate and the source of the fourth switch M4 is greater than the threshold voltage, the fourth switch M4 is also turned on, so that the switch module 124 is turned on. If the atomizer 12 is inserted into the battery rod 11 reversely, that is, the power supply voltage connection end m1 of the atomizer 12 is connected to the ground voltage connection end n2 of the battery rod 11 and the ground voltage connection end m2 of the atomizer 12 is connected to the power supply voltage connection end n1 of the battery rod 11, voltages of the control ends (gates) of the third switch M3 and the fourth switch M4 are at a high level. A voltage difference Vgs between the control end (gate) and the first channel end (source) of the fourth switch M4 is greater than the threshold voltage. In this case, the fourth switch M4 is turned on first, and the drain of the third switch M3 is turned on, and then connected to the ground voltage output end GND. The voltage of the first channel end (source) of the third switch M3 is clamped to Vsd by the body diode. When a voltage difference Vgs between the gate and the source of the third switch M3 is greater than the threshold voltage, the third switch M3 is also turned on, so that the switch module 124 is turned on.

Specifically, if only the third switch M3 exists in the switch module 124, when the atomizer 12 is inserted into the battery rod 11, the third switch M3 can be normally turned off or turned on. However, when the atomizer is inserted into the battery rod 11 reversely, the body diode of the third switch M3 directly conducts the ground voltage connection end m2 of the atomizer 12 to the ground. If only the fourth switch M4 exists in the switch module 124, when the atomizer 12 is inserted into the battery rod 11, the fourth switch M4 can be normally turned off or turned on. However, when the atomizer is inserted into the battery rod 11 reversely, the body diode of the fourth switch M4 directly conducts the power supply voltage connection end m1 of the atomizer 12 to the ground. As a result, there is a problem that the body diode is clamped to the ground voltage output end GND, resulting in the failure of the circuit.

In this embodiment, the level exchange module 125 includes a rectifying circuit 126. The rectifying circuit 126 includes a first path, a second path, a power supply voltage output end VCC, and a ground voltage output end GND, where the first path and the second path are connected in parallel and are respectively arranged between the power supply voltage output end VCC and the ground voltage output end GND, the first path is connected to the first input end (the first input end is the power supply voltage connection end m1 of the atomizer 12), and the second path is connected to the second input end (the second input end is the ground voltage connection end m2 of the atomizer 12).

The level exchange module 125 further includes a first control unit 128. The first control unit 128 is arranged between the second input end and the ground voltage output end GND, and is connected to the first path. The second control unit 127 is arranged between the first input end and the ground voltage output end GND, and is connected to the second path. When the first input end is used as the power supply voltage connection end m1 of the atomizer 12 to receive the power supply voltage output end VCC, and the second input end is used as the ground voltage connection end m2 of the atomizer 12 to receive the ground voltage output end GND, that is, the atomizer 12 is inserted into the battery rod 11 rightly, the first control unit 128 controls the first path to conduct the path between the first input end and the power supply voltage output end VCC, and the second control unit 127 controls the second path to conduct the path between the second input end and the ground voltage output end GND. When the first input end is used as the ground voltage connection end m2 of the atomizer 12 to receive the ground voltage output end GND, and the second input end is used as the power supply voltage connection end m1 of the atomizer 12 to receive the power supply voltage output end VCC, that is, the atomizer 12 is inserted into the battery rod 11 reversely, the second control unit 127 controls the second path to conduct the path between the second input end and the power supply voltage output end VCC, and the first control unit 128 controls the first path to conduct the path between the first input end and the ground voltage output end GND.

Specifically, the first control unit 128 includes: a fourth resistor R4, a third diode D3, and a second capacitor C2. The first end of the fourth resistor R4 is connected to the second input end, and the second end of the fourth resistor R4 is connected to the ground voltage output end GND. The first end of the third diode D3 is connected to the second input end, and the second end of the third diode D3 is connected to the ground voltage output end GND. The first end of the second capacitor C2 is connected to the second end of the fourth resistor R4, and the second end of the second capacitor C2 is connected to the ground voltage output end GND.

The second control unit 127 includes: a third resistor R3, a second diode D2, and a third capacitor C3. The first end of the third resistor R3 is connected to the first input end, and the second end of the third resistor R3 is connected to the ground voltage output end GND. The first end of the second diode D2 is connected to the first input end, and the second end of the second diode D2 is connected to the ground voltage output end GND. The first end of the third capacitor C3 is connected to the second end of the third resistor R3, and the second end of the third capacitor C3 is connected to the ground voltage output end GND.

The first path includes: a seventh switch M7 and an eighth switch M8. The seventh switch M7 includes a first channel end, a second channel end, and a control end, the control end of the seventh switch M7 is connected to the first end of the second capacitor C2, the first channel end of the seventh switch M7 is connected to the power supply voltage output end VCC, and the second channel end of the seventh switch M7 is connected to the first input end. The eighth switch M8 includes a first channel end, a second channel end, and a control end, the control end of the eighth switch M8 is connected to the first end of the third capacitor C3, the first channel end of the eighth switch M8 is connected to the ground voltage output end GND, and the second channel end of the eighth switch M8 is connected to the first input end.

The second path includes: a fifth switch M5 and a sixth switch M6. The fifth switch M5 includes a first channel end, a second channel end, and a control end, the control end of the fifth switch M5 is connected to the first end of the third capacitor C3, the first channel end of the fifth switch M5 is connected to the ground voltage output end GND, and the second channel end of the fifth switch M5 is connected to the second input end. The sixth switch M6 includes a first channel end, a second channel end, and a control end, the control end of the sixth switch M6 is connected to the first end of the third capacitor C3, the first channel end of the sixth switch M6 is connected to the power supply voltage output end VCC, and the second channel end of the sixth switch M6 is connected to the second input end.

Specifically, in an embodiment, the second control chip 121 in the atomizer 12 further includes a ground voltage output end GND, and the ground voltage output end GND in the rectifying circuit 126 is connected to the ground voltage output end GND of the second control chip 121. Specifically, the power supply voltage output end VCC in the rectifying circuit 126 is connected to the power supply end VCC of the second control chip 121.

Specifically, when the atomizer 12 is inserted into the battery rod 11 rightly, the power supply voltage connection end m1 of the atomizer 12 is connected to the power supply voltage connection end n1 of the battery rod 11 and receives the power supply voltage output end VCC; and the ground voltage connection end m2 of the atomizer 12 is connected to the ground voltage connection end n2 of the battery rod 11 and receives the ground voltage output end GND. In this case, since the ground voltage connection end m2 of the atomizer 12 is connected to the ground voltage connection end n2 of the battery rod 11, the second control unit 127 controls the fifth switch M5 in the second path to be turned on and the sixth switch M6 to be turned off, and the ground voltage connection end m2 is connected to the ground voltage output end GND through the fifth switch M5. Since the power supply voltage connection end m1 of the atomizer 12 is connected to the power supply voltage connection end n1 of the battery rod 11, the first control unit 128 controls the seventh switch M7 in the first path to be turned on and the eighth switch M8 to be turned off, and the power supply voltage connection end m1 is connected to the power supply voltage output end VCC through the seventh switch M7.

When the atomizer 12 is reversely inserted into the battery rod 11, the power supply voltage connection end m1 of the atomizer 12 is connected to the ground voltage connection end n2 of the battery rod 11 and receives the ground voltage output end GND; and the ground voltage connection end m2 of the atomizer 12 is connected to the power supply voltage connection end n1 of the battery rod 11 and receives the power supply voltage VDD. In this case, since the ground voltage connection end m2 of the atomizer 12 is connected to the power supply voltage connection end n1 of the battery rod 11, the second control unit 127 controls the sixth switch M6 in the second path to be turned on and the fifth switch M6 to be turned off, and the ground voltage connection end m2 is connected to the power supply voltage output end VCC through the sixth switch M6. Since the power supply voltage connection end m1 of the atomizer 12 is connected to the ground voltage connection end n2 of the battery rod 11, the first control unit 128 controls the eighth switch M8 in the first path to be turned on and the seventh switch M7 to be turned off, and the power supply voltage connection end m1 is connected to the ground voltage output end GND through the eighth switch M8.

Specifically, when the atomizer 12 is inserted into the battery rod 11 rightly, the power supply voltage connection end m1 is connected to a positive voltage, the third capacitor C3 in the second control unit 127 is charged, the fifth switch M5 is turned on, and the sixth switch M6 is turned off. At a moment when the level of the power supply voltage connection end m1 changes from high to low, the third capacitor C3 cannot discharge through the second diode D2, and can only discharge slowly through the third resistor R3. The gates of the sixth switch M6 and the fifth switch M5 are maintained at a high level, the fifth switch M5 is kept in an on state, and the sixth switch M6 is kept in an off state, until the fifth switch M5 is turned off when the gate voltage thereof is lower than the threshold voltage. The second diode D2, the third resistor R3, and the third capacitor C3 are grounded, and thus are always in a low level state. In addition, when the atomizer 12 is inserted into the battery rod 11 rightly, the level of the power supply voltage connection end m1 is instantaneously high, and the seventh switch M7 in the first path is turned on. The eighth switch M8 is turned off instantaneously. Moreover, at a moment when the level of the power supply voltage connection end m1 changes from high to low, the seventh switch M7 and the eighth switch M8 are turned off simultaneously. In this embodiment, the first control unit 128 and the second control unit 127 can always keep the fifth switch M5 in an on state for a required time (for example, about 30ms, where the required time is determined by the values of the third resistor R3 and the third capacitor C3) when the atomizer 12 is inserted rightly. Without the first control unit 128 and the second control unit 127, when the power supply voltage connection end m1 is switched from a high level to a low level, the fifth switch M5, the sixth switch M6, the seventh switch M7, and the eighth switch M8 are turned off simultaneously. As a result, there is a voltage difference between the gate and the source of the third switch M3 and the fourth switch M4 of the switch module 124, and then the third switch M3 and the fourth switch M4 are turned on. Consequently, the communication between the atomizer 12 and the battery rod 11 is interrupted.

Specifically, when the atomizer 12 is inserted into the battery rod 11 reversely, the ground voltage connection end m2 is connected to a positive voltage, the second capacitor C2 in the first control unit 128 is charged, the eighth switch M8 is turned on, and the seventh switch M7 is turned off. At a moment when the level of the ground voltage connection end m2 changes from high to low, the second capacitor C2 cannot discharge through the third diode D3, and can only discharge slowly through the fourth resistor R4. The gates of the seventh switch M7 and the eighth switch M8 are maintained at a high level, the eighth switch M8 is kept in an on state, and the seventh switch M7 is kept in an off state, until the eighth switch M8 is turned off when the gate voltage thereof is lower than the threshold voltage. The third diode D3, the fourth resistor R4, and the second capacitor C2 are grounded, and thus are always in a low level state. In addition, when the atomizer 12 is inserted into the battery rod 11 reversely, the level of the ground voltage connection end m2 is instantaneously high, and the sixth switch M6 in the second path is turned on. The fifth switch M5 is turned off instantaneously. Moreover, at a moment when the level of the ground voltage connection end m2 changes from high to low, the fifth switch M5 and the sixth switch M6 are turned off simultaneously. In this embodiment, the first control unit 128 and the second control unit 127 can always keep the sixth switch M6 in an on state for a required time (for example, about 30ms, where the required time is determined by the values of the fourth resistor R4 and the second capacitor C2) when the atomizer 12 is inserted reversely. Without the first control unit 128 and the second control unit 127, when the power supply voltage connection end m1 is switched from a high level to a low level, the fifth switch M5, the sixth switch M6, the seventh switch M7, and the eighth switch M8 are turned off simultaneously. As a result, there is a voltage difference between the gate and the source of the third switch M3 and the fourth switch M4 of the switch module 124, and then the third switch M3 and the fourth switch M4 are turned on. Consequently, the communication between the atomizer 12 and the battery rod 11 is interrupted.

As shown in FIG. 7, FIG. 7 is a schematic structural diagram of an electronic atomization device according to a first embodiment of the present disclosure. In this embodiment, when the atomizer 12 is inserted into the battery rod 11, the power supply voltage connection end n1 of the battery rod 11 is connected to the power supply voltage connection end m1 of the atomizer 12, and the ground voltage connection end n2 of the battery rod 11 is connected to the ground voltage connection end m2 of the atomizer 12.

Specifically, the battery rod 11 in this embodiment includes the battery rod shown in FIG. 1, and details are not described herein again. The atomizer 12 in this embodiment includes the atomizer 12 shown in any of the foregoing embodiments in FIG. 4 and FIG. 5, and details are not described herein again.

In the electronic atomization device shown in this embodiment, the atomizer 12 is inserted into the battery rod 11, and the battery rod 11 supplies power to the atomizer 12 and sends data to the atomizer 12. After receiving the sending data sent by the battery rod 11, the atomizer 12 feeds back identification information to the battery rod 11, for the battery rod 11 to use, according to the identification information, a corresponding power to drive the atomizer 12, to avoid the mixed use of the battery rod 11 and the atomizer 12. Specifically, if the battery rod 11 and the atomizer 12 are mixed, a difference in driving powers causes the odor of smoke or the amount of smoke to be too small or too large. In another example, a difference in resistance values of the heating wire leads to cases such as overcurrent protection and no smoke generation. Through the method of the present disclosure, the battery rod 11 and the atomizer 12 can be identified with each other, and the battery rod 11 can use the power matching the atomizer 12 to drive the atomizer 12, thereby improving the user experience.

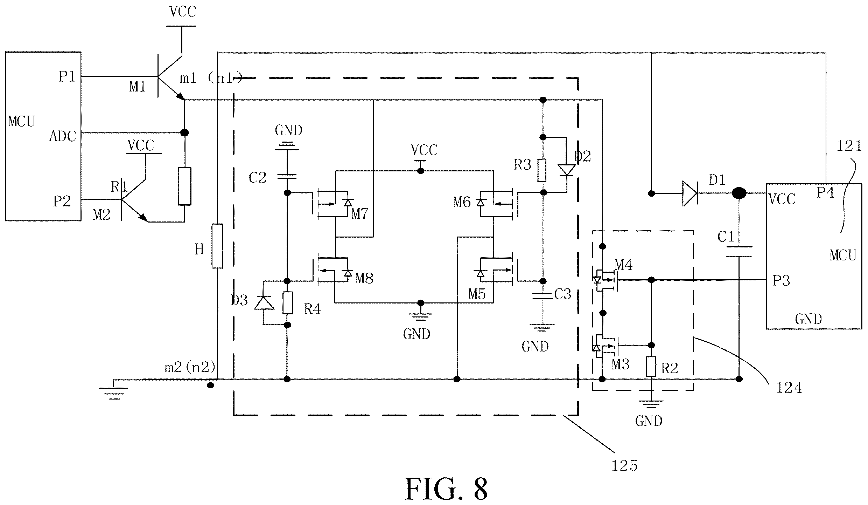

As shown in FIG. 8, FIG. 8 is a schematic structural diagram of an electronic atomization device according to a second embodiment of the present disclosure. Compared with the first embodiment shown in FIG. 7, the difference is that the electronic atomization device shown in this embodiment further includes the level exchange module 125. Specifically, in the schematic structural diagram of the electronic atomization device shown in this embodiment, the atomizer 12 is inserted into the battery rod 11 rightly. Specifically, in this embodiment, the power supply voltage connection end n1 of the battery rod 11 is connected to the power supply voltage connection end m1 of the atomizer 12, and the ground voltage connection end n2 of the battery rod 11 is connected to the ground voltage connection end m2 of the atomizer 12. Specifically, the power supply voltage connection end n1 of the battery rod 11 is connected to the power supply voltage output end VCC, and the ground voltage connection end n2 of the battery rod 11 is connected to the ground voltage output end GND.

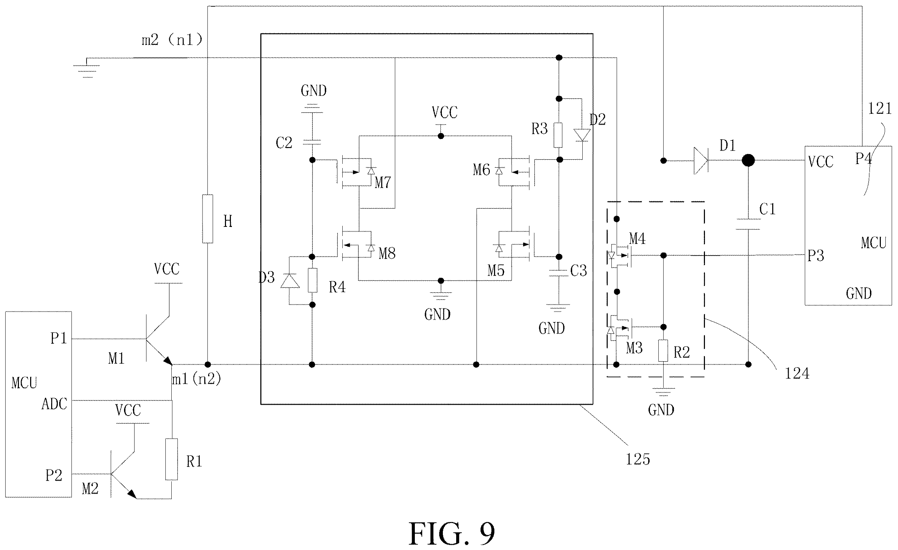

As shown in FIG. 9, FIG. 9 is a schematic structural diagram of an electronic atomization device according to a third embodiment of the present disclosure. Compared with the first embodiment shown in FIG. 7, the difference is that the electronic atomization device shown in this embodiment further includes the level exchange module 125. Specifically, in the schematic structural diagram of the electronic atomization device shown in this embodiment, the atomizer 12 is inserted into the battery rod 11 reversely. Specifically, in this embodiment, the power supply voltage connection end n1 of the battery rod 11 is connected to the ground voltage connection end m2 of the atomizer 12, and the ground voltage connection end n2 of the battery rod 11 is connected to the power supply voltage connection end m1 of the atomizer 12. Specifically, the power supply voltage connection end n1 of the battery rod 11 is connected to the power supply voltage output end VCC, and the ground voltage connection end n2 of the battery rod 11 is connected to the ground voltage output end GND.

In the electronic atomization device shown in the second embodiment in FIG. 8 and the electronic atomization device shown in the third embodiment in FIG. 9, the atomizer 12 is inserted into the battery rod 11, and the battery rod 11 supplies power to the atomizer 12 and sends data to the atomizer 12. After receiving the sending data sent by the battery rod 11, the atomizer 12 feeds back identification information to the battery rod 11, for the battery rod 11 to use, according to the identification information, a corresponding power to drive the atomizer 12, to avoid the mixed use of the battery rod 11 and the atomizer 12. Specifically, if the battery rod 11 and the atomizer 12 are in mixed use, a difference in driving powers causes the odor of smoke or the amount of smoke to be too small or too large. In another example, a difference in resistance values of the heating wire leads to cases such as overcurrent protection and no smoke generation. Through the method of the present disclosure, the battery rod 11 and the atomizer 12 can be identified with each other, and the battery rod 11 can use the power matching the atomizer 12 to drive the atomizer 12, thereby improving the user experience. In addition, the electronic atomization device described in this embodiment enables the atomizer 12 to be inserted into the battery rod 11 rightly or reversely, and the atomizer 12 can be inserted into the battery rod 11 rightly or reversely without affecting the communication between the battery rod 11 and the atomizer 12.

The foregoing descriptions are merely implementations of the present disclosure, and the protection scope of the present disclosure is not limited thereto. All equivalent structure or process changes made according to the content of this specification and accompanying drawings in the present disclosure or by directly or indirectly applying the present disclosure in other related technical fields shall fall within the protection scope of the present disclosure.

## Claims

1. An atomizer, comprising:
a first input end and a second input end;
a heating element, arranged between the first input end and the second input end; and
a level exchange module, connecting the first input end and the second input end, for the atomizer to be inserted into a battery rod rightly or reversely, wherein one of the first input end and the second input end of the atomizer is used as a power supply voltage input end of the atomizer, and the other is used as a ground voltage input end of the atomizer.

2. The atomizer of claim 1, wherein the level exchange module comprises:
a rectifying circuit, comprising a first path, a second path, a power supply voltage output end, and a ground voltage output end, wherein the first path and the second path are connected in parallel and are respectively arranged between the power supply voltage output end and the ground voltage output end, the first path is connected to the first input end, and the second path is connected to the second input end;
a first control unit, arranged between the second input end and the ground voltage output end, and connected to the first path; and
a second control unit, arranged between the first input end and the ground voltage output end, and connected to the second path, wherein
when the first input end is used as the power supply voltage input end to receive a power supply voltage, and the second input end is used as the ground voltage input end to receive a ground voltage, the first control unit controls the first path to conduct the path between the first input end and the power supply voltage output end, and the second control unit controls the second path to conduct the path between the second input end and the ground voltage output end; and
when the first input end is used as the ground voltage input end to receive a ground voltage, and the second input end is used as the power supply voltage input end to receive a power supply voltage, the second control unit controls the second path to conduct the path between the second input end and the power supply voltage output end, and the first control unit controls the first path to conduct the path between the first input end and the ground voltage output end.

3. The atomizer of claim 2, wherein the first control unit comprises:
a fourth resistor, the first end of which is connected to the second input end, and the second end of which is connected to the ground voltage output end;
a third diode, the first end of which is connected to the second input end, and the second end of which is connected to the ground voltage output end; and
a second capacitor, the first end of which is connected to the second end of the fourth resistor, and the second end of which is connected to the ground voltage output end; and
the second control unit comprises:
a third resistor, the first end of which is connected to the first input end, and the second end of which is connected to the ground voltage output end;
a second diode, the first end of which is connected to the first input end, and the second end of which is connected to the ground voltage output end; and
a third capacitor, the first end of which is connected to the second end of the third resistor, and the second end of which is connected to the ground voltage output end.

4. The atomizer of claim 3, wherein the first path comprises:
a seventh switch, a control end of which is connected to the first end of the second capacitor, a first channel end of which is connected to the power supply voltage output end, and a second channel end of which is connected to the first input end; and
an eighth switch, a control end of which is connected to the first end of the third capacitor, a first channel end of which is connected to the ground voltage output end, and a second channel end of which is connected to the first input end.

5. The atomizer of claim 3, wherein the second path comprises:
a fifth switch, a control end of which is connected to the first end of the third capacitor, a first channel end of which is connected to the ground voltage output end, and a second channel end of which is connected to the second input end; and
a sixth switch, a control end of which is connected to the first end of the third capacitor, a first channel end of which is connected to the power supply voltage output end, and a second channel end of which is connected to the second input end.

6. The atomizer of claim 2, further comprising:
an identification circuit, connecting the first input end and the second input end, wherein when the atomizer is inserted into the battery rod, the identification circuit is configured to feed back identification information of the atomizer, for the battery rod to use, according to the identification information fed back, a corresponding power to drive the atomizer.

7. The atomizer of claim 6, wherein the identification circuit comprises:
a second control chip, comprising a power supply end, a signal acquisition end, and a drive end;
a storage capacitor, wherein the first end of the storage capacitor is connected to the first input end, the second end of the storage capacitor is connected to the second input end, and the first end of the storage capacitor is connected to the power supply end of the second control chip; and
a switch module, wherein a control end of the switch module is connected to the drive end of the second control chip, a first channel end of the switch module is connected to the first input end, and a second channel end of the switch module is connected to the second input end, wherein
the signal acquisition end of the second control chip is connected to the first input end.

8. The atomizer of claim 7, wherein the switch module comprises a third switch and a fourth switch, a control end of the third switch and a control end of the fourth switch are connected and used as the control end of the switch module, a second channel end of the third switch and a second channel end of the fourth switch are connected, and a first channel end of the third switch and a first channel end of the fourth switch are respectively used as the first channel end and the second channel end of the switch module and are respectively connected to the first input end and the second input end of the atomizer.

9. A battery rod, comprising:
a first output end and a second output end, wherein
when an atomizer is inserted into the battery rod rightly or reversely, one of the first output end and the second output end is used as a power supply voltage input end of the atomizer, and the other is used as a ground voltage input end of the atomizer.

10. The battery rod of claim 9, further comprising:
a power supply identifying circuit, wherein when the atomizer is inserted into the battery rod, the power supply identifying circuit receives identification information fed back by the atomizer, and uses, according to the identification information fed back, a corresponding power to drive the atomizer.

11. The battery rod of claim 10, wherein the power supply identifying circuit comprises:
a first control chip, comprising a first drive end, a second drive end, and a feedback end;
a first switch, a control end of which is connected to the first drive end to receive a first drive signal, a first channel end of which is connected to a power supply voltage, and a second channel of which is connected to the first output end of the battery rod; and
a second switch, a control end of which is connected to the second drive end to receive a second drive signal, a first channel end of which is connected to the power supply voltage, and a second channel end of which is connected to the first output end of the battery rod through a first resistor, wherein
the feedback end of the first control chip is connected to the first output end of the battery rod, and the second output end of the battery rod is connected to a ground voltage.

12. The battery rod of claim 11, wherein when the atomizer is rightly inserted into the battery rod, the first output end is connected to a first input end of the atomizer, and the second output end is connected to a second input end of the atomizer; and
when the atomizer is reversely inserted into the battery rod, the second output end is connected to the first input end of the atomizer, and the first output end is connected to the first input end of the atomizer.

13. The battery rod of claim 11, wherein the first control chip controls the first switch by using the first drive signal to supply power to the atomizer, and controls the second switch by using the second drive signal to communicate with the identification circuit of the atomizer, to obtain the identification information of the atomizer, and adjust the first drive signal according to the identification information fed back to use the corresponding power to drive the atomizer.

14. An electronic atomization device, comprising the atomizer according to any one of claims 1 to 8 and/or the battery rod according to any one of claims 9 to 13.
